# EUROPÄISCHE PATENTSCHRIFT

(11) **EP 2 359 448 B1**
(45) Veröffentlichungstag und Bekanntmachung des Hinweises auf die Patenterteilung: **29.03.2017**
(21) Anmeldenummer: 09774896.6
(22) Anmeldetag: 11.12.2009
(51) Int. Cl.: H02G 3/00, B64D 47/00, H02G 3/30, H02G 3/36

(54) **VORINSTALLIERTES, ANPASSBARES LEITUNGSNETZ FÜR FLUGZEUGE**
PREINSTALLED, ADAPTABLE ELECTRICAL GRID FOR AIRPLANES
RESEAU ÉLECTRIQUE PRÉ-INSTALLÉ ET ADAPTABLE POUR AVIONS

(30) Priorität: 17.12.2008 DE 102008062700; 17.12.2008 US 138229 P
(43) Veröffentlichungstag der Anmeldung: 24.08.2011
(73) Patentinhaber: Airbus Operations GmbH, 21129 Hamburg (DE)
(72) Erfinder: BROWNJOHN, Nicholas, 21614 Buxtehude (DE); OSTERNACK, Stefan, 20144 Hamburg (DE)
(74) Vertreter: Kopf Westenberger Wachenhausen Patentanwälte PartG mbB
(86) Internationale Anmeldenummer: PCT/EP2009/066948
(87) Internationale Veröffentlichungsnummer: WO 2010/079042

(56) Entgegenhaltungen:
- WO-A1-02/081307
- WO-A2-2010/028006
- DE-A1- 3 531 028
- DE-A1-102006 050 534

## Beschreibung

### Gebiet der Erfindung

Die Erfindung betrifft eine Flugzeugstruktur mit einem Leitungsnetz und ein Verfahren für deren Herstellung.

### Technologischer Hintergrund

Die bisherige Verkabelung in Flugzeugen zur Verbindung von Flugzeugsystemkomponenten erfordert einen hohen Planungs- und Fertigungsaufwand. Schon bei der Konfiguration des Flugzeuges muss die Kabelführung festgelegt werden, wobei insbesondere der Platzbedarf eine große Rolle spielt. Eine Änderung der Anordnung von Systemkomponenten erfordert eine aufwendige Anpassung der damit verbundenen Verkabelung. Ferner müssen Vorkehrungen getroffen werden, um die Kabel von der Flugzeugstruktur zu beabstanden, so dass ein Aufreiben oder gar Durchtrennen von Kabeln verhindert wird, was ansonsten zu Kurzschlüssen und zum Verlust von Systemfunktionen führen könnte.

WO 02/081307 A1 beschreibt einen redundanten, in eine Sektion eines Flugzeugflügels eingebetteten Kabelbaum.

DE 35 31 028 A1 beschreibt eine durch Spanten versteifte Struktur einer Flugzeugzelle, bei der die Spanten aus Aluminiumschichten bestehen, die durch Polyaramidschichten voneinander getrennt sind. Die Aluminiumschichten können durchgehend verlaufen oder aus mehreren Bahnen bestehen, um dem Energie- oder Informationstransport zu dienen.

DE 10 2006 050 534 A1 beschreibt ein Leitungssystem für ein Luftfahrzeug, welches elektrische und optische Leitungen aufweist, die in einer Rumpfschale integriert sind.

WO 2010/028006 A2 beschreibt ein elektrisch leitfähiges Element in Mehrschichtbauweise.

### Zusammenfassung der Erfindung

Der Erfindung liegt die Aufgabe zugrunde, die mit der Verkabelung von Flugzeugen verbundenen Probleme zumindest teilweise zu lösen.

Diese Aufgabe wird mit einer Flugzeugstruktur und einem Verfahren für deren Herstellung gemäß den unabhängigen Ansprüchen gelöst. Vorteilhafte Weiterentwicklungen der Erfindung sind Gegenstand der abhängigen Ansprüche.

Gemäß einem Ausführungsbeispiel der Erfindung wird eine Flugzeugstruktur bereitgestellt, mit Strukturelementen; einer ersten Vielzahl von Leitungen, die fest bzw. nicht lösbar, vorzugsweise irreversibel, mit Strukturelementen verbunden sind; einer zweiten Vielzahl von Leitungen, die fest bzw. nicht lösbar, vorzugsweise irreversibel, mit Strukturelementen verbunden sind und deren Längsrichtung sich mit der Längsrichtung der ersten Vielzahl von Leitungen kreuzt, so dass die Längsrichtungen der Leitungen ein die Flugzeugstruktur zumindest abschnittsweise überspannendes Netz bilden; und Verbindungselementen, um, im in die Flugzeugstruktur eingebauten Zustand der Strukturelemente, ausgewählte Leitungen der ersten Vielzahl mit ausgewählten Leitungen der zweiten Vielzahl an ausgewählten Kreuzungspunkten des Netzes zu verbinden, um somit Leitungen zur Strom- und/oder Datenübertragung auszubilden.

Die Erfindung ist darauf gerichtet die bisherige standardmäßige elektrische Verkabelung einer Flugzeugstruktur, insbesondere eines Flugzeugrumpfs, durch ein die Struktur überspannendes, anpassbares Netz aus Leitungen, vorzugsweise Glasfasern, zu ersetzen. Dabei wird die Flugzeugstruktur dazu verwendet, die Daten- und/oder Stromverbindungen zu tragen, die zu integralen Bestandteilen der Flugzeugstruktur werden. Das derart vorinstallierte Netz bzw. Gitter aus Leitungen bietet somit eine Verbindungsmöglichkeit für verschiedene Systeme. Eine bestimmte Leitungsroute wird verwirklicht, indem eine axial verlaufende Leitung (z.B. in einem Längsspant) mit einer quer dazu verlaufenden Leitung (z.B. in einem Querspant oder in einem Querträger) verbunden wird. Jedes Strukturelement, wie beispielsweise Längsspant, Querspant oder Querträger, kann eine Vielzahl an Leitungen mit wenig oder gar ohne Gewichtssteigerung im Verhältnis zur nackten Flugzeugrumpfstruktur tragen. Durch dieses Konzept beschränkt sich der verbleibende Installationsaufwand bei der Integration von Systemen auf die letzten Zentimeter oder Meter zwischen dem Zugangspunkt zum Leitungsnetz und der Schnittstelle des anzusteuernden oder steuernden Systems. Die verbleibende Verkabelung (mittels elektrischer oder optischer Verbindungen) beschränkt sich somit auf kurze Verbindungen zwischen Leitungsnetz und endgültiger Systemausrüstung entsprechend der jeweiligen Kundenbedürfnisse.

Durch die hier beschriebene Flugzeugstruktur ist eine große Anzahl möglicher Verbindungsrouten mit möglichst geringer oder nahezu keiner Gewichtszunahme vorinstalliert. Falls optische Leitungen in die Strukturelemente eingebettet werden entsteht nahezu keine Gewichtszunahme. Werden elektrische Leitungen mit den Strukturelementen verbunden, dann entsteht gegenüber den leitungsfreien Strukturelementen eine leichte Gewichtszunahme, wobei jedoch im Verhältnis zur bisherigen Verkabelung mit Kabelbäumen und zugehörigen Halterungen sehr viel an Gewicht eingespart werden kann.

Das vorinstallierte Netz an Leitungen erlaubt ein umfangreiches Verschieben bzw. Versetzen von Systemkomponenten, ohne die komplette Verbindungsinfrastruktur zu stören bzw. diese neu definieren zu müssen. Außerdem können Kabel, entsprechende Kabelbäume, Montageklammern, Halterungen und Kabelbinder, usw. eingespart werden, was zu enormen Gewichtseinsparungen führt. Ferner können durch die eingebetteten Leitungen viel kleinere Radien vorgesehen werden, falls ein Richtungswechsel erforderlich ist. Darüber hinaus bietet dieses Netz den Systemingenieuren eine große Anzahl an freien Verbindungsrouten, die zur Installation neuer Systemkomponenten einfach ausgewählt werden können ohne eine neue Leitung definieren und in die Flugzeugstruktur installieren zu müssen. Somit kann bei jedem Flugzeugprogramm sehr viel Zeit bei der Definition und Verwirklichung von Verbindungsrouten eingespart werden.

Gemäß einem weiteren vorteilhaften Ausführungsbeispiel ist ein Verfahren zur Herstellung einer Flugzeugstruktur bereitgestellt, mit dem ebenfalls die oben genannten Vorteile erreicht werden können.

Im Folgenden werden mit Verweis auf die Figuren Ausführungsbeispiele der Erfindung beschrieben.

### Kurze Figurenbeschreibung

- Fig. 1: zeigt ein Flugzeug, in dem einige Primärstrukturelemente veranschaulicht sind;
- Fig. 2: zeigt schematisch eine Leitungsanordnung gemäß einem Ausführungsbeispiel der Erfindung;
- Fig. 3: zeigt schematisch das resultierende Netz aus Leitungen;
- Fig. 4: zeigt eine spezifische Ausgestaltung der Verbindung von Leitungen;
- Fig. 5: zeigt eine weitere spezifische Ausgestaltung der Verbindung von Leitungen;
- Fig. 6: zeigt eine weitere spezifische Ausgestaltung der Verbindung von Leitungen;
- Fig. 7: zeigt Zugangskupplungen zum Anschluss an die eingebetteten Leitungen; und
- Fig. 8: zeigt die Verbindung von fluchtenden Leitungen.

### Detaillierte Beschreibung von Ausführungsbeispielen

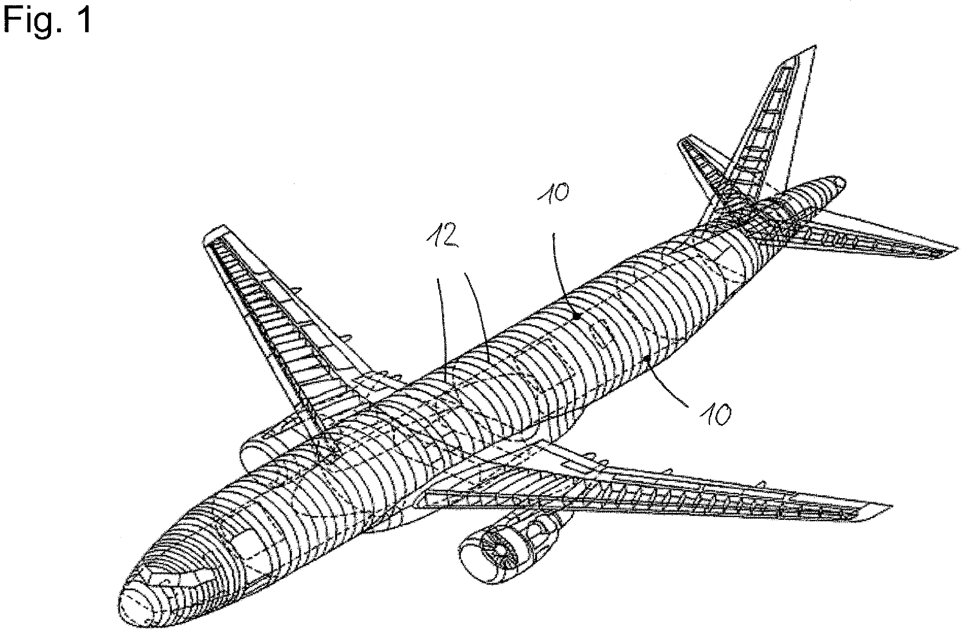

Figur 1 zeigt ein Flugzeug, in dem einige Primärstrukturelemente veranschaulicht sind. Die in Flugzeuglängsrichtung verlaufenden und mit dem Bezugszeichen 10 gekennzeichneten Strukturelemente werden als Längsspanten bezeichnet. Bei den dazu quer und im Wesentlichen die Außenform des Rumpfquerschnitt vorgebend verlaufenden bogenförmigen Strukturelementen handelt es sich um Querspanten 12 und bei den quer zur Flugzeuglängsrichtung und in der Horizontalen (bezogen auf das am Boden stehende Flugzeug) verlaufenden Strukturelementen spricht man von Querstreben, auf denen beispielsweise der Kabinenboden oder ein Frachtraumboden montierbar ist.

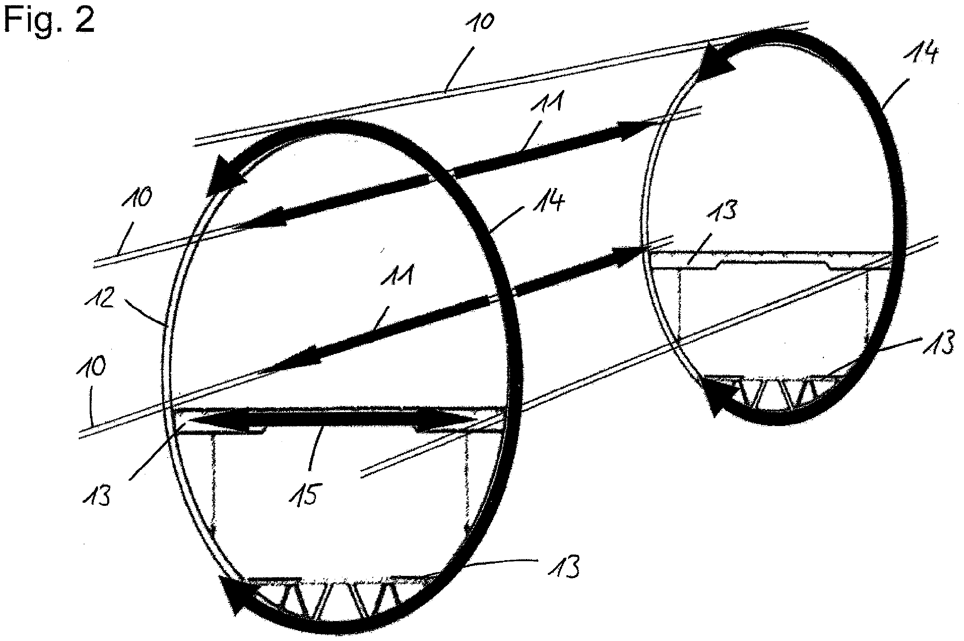

Figur 2 zeigt schematisch eine Leitungsanordnung gemäß einem Ausführungsbeispiel der Erfindung. Üblicherweise verlaufen im Flugzeugbau einige Längsspanten 10 parallel zueinander in Flugzeuglängsrichtung. Eine erste Vielzahl von Leitungen 11 ist mit diesen Längsspanten 10 verbunden. Quer zur Flugzeuglängsrichtung verlaufen die Querspanten 12, welche die Querschnittform des Flugzeugrumpfs vorgeben. Dabei setzt sich der in Figur 2 dargestellte ovale Rumpfquerschnitt aus mehreren stirnseitig miteinander verbundenen Querspanten 12 zusammen. Die Querspanten 12 sind mit den Längsspanten 10 derart verbunden, dass eine Gitterstruktur ausgebildet wird. Darüber hinaus verlaufen quer zur Flugzeuglängsrichtung und in einer Horizontalen Querstreben 13. Von diesen Querspanten 12 und/oder von den Querstreben 13 wird eine zweite Vielzahl von Leitungen getragen, wobei die von den Querspanten 12 getragenen Leitungen mit dem Bezugszeichen 14 und die von den Querstreben 13 getragenen Leitungen mit dem Bezugszeichen 15 versehen sind. Die Strukturelemente können aus Metall, Metallmatrix-Verbundwerkstoffen oder Verbundmaterialien, wie beispielsweise kohle- oder glasfaserverstärkten Epoxidharzen hergestellt sein. Die Leitungen 11, 14, 15 sind in die jeweiligen Längsspanten 10, Querspanten 12 oder Querstreben 13 eingebettet oder auf diesen angeordnet. Jedes einzelne dieser Strukturelemente 10, 12, 13 kann mit einer oder mehreren Einzelleitungen und/oder einem oder mehreren zusammengehörigen Leitungsbündeln vorzugsweise in Form von Flachbandleitungen (z.B. 12 bis 96 parallel zueinander verlaufende optische Leitungen) versehen sein.

Im Fall metallischer Strukturelemente sind die Leitungen vorzugsweise auf der Oberfläche der Strukturelemente mittels Aufkleben, Aufsprühen (im Falle einer elektrischen Leitung), Aufdampfen (im Falle einer elektrischen Leitung), Einbetten in eine aufgebrachte Lackschicht oder durch Einbringung der Leitung zwischen dem Strukturelement und einer darauf aufgebrachten Außenhaut aufbringbar. Handelt es sich um Metallmatrix-Verbundwerkstoffe, dann könnten die Leitungen ebenfalls auf der Oberfläche aufgebraucht sein und im Falle der optischen Leitungen könnten diese auch in die Metallmatrix eingebettet werden, beispielsweise durch Einlegen in die Faserverstärkung.

Bei Verwendung von Verbundwerkstoffen zur Herstellung der Strukturelemente, kann ebenfalls eine derartige Aufbringung auf der Oberfläche der Strukturelemente erfolgen und/oder die Leitungen werden in die Strukturelemente eingebettet. Eine solche Einbettung kann bei der Herstellung des Strukturelements mittels Verweben oder Einlegen in die Faserverstärkung, durch Laminieren oder durch Einlegen in das Harz erfolgen. Die derart in die Strukturelemente integrierten Leitungen werden so zu integralen Bestandteilen der Strukturelemente. Hierdurch tragen die Leitungen in multifunktionaler Weise sowohl zur Stabilität des Strukturelements als auch zur Daten- bzw. Stromführung bei.

Bei den Leitungen 11, 14, 15 handelt es sich vorzugsweise um optische Leitungen bzw. Lichtwellenleiter, insbesondere Glasfaserleitungen, jedoch können alternativ oder zusätzlich zu den optischen Leitungen auch elektrische Leitungen, insbesondere Kupferdrähte oder Kupferbahnen vorgesehen sein. Die optischen Leitungen dienen zur Datenübertragung, wohingegen die elektrischen Leitungen vorzugsweise zur Stromübertragung im Niederleistungsbereich vorgesehen sind. Bei der Verbindung der elektrischen Leitungen mit den Strukturelementen ist zusätzlich eine entsprechende Isolierung dieser gegenüber der Umgebung sowie dem Strukturmaterial (z.B. dem Metall oder den Kohlefasern) vorzusehen, die beispielsweise durch eine entsprechende Ummantelung (z.B. Hochtemperatur-Polyamid) der elektrischen Leitungen realisiert werden kann.

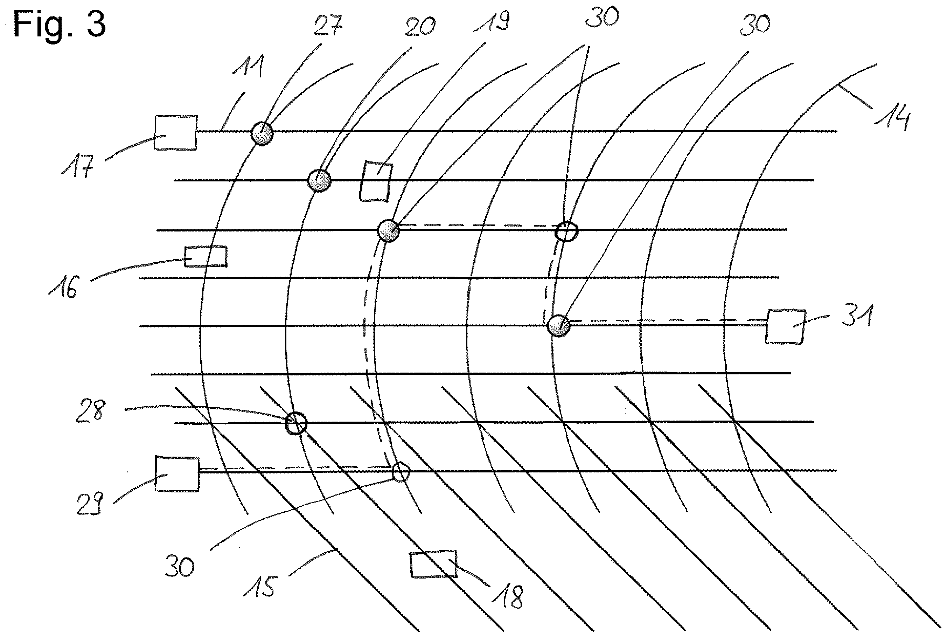

Figur 3 zeigt schematisch das resultierende Netz aus Leitungen. Aus Gründen der Übersichtlichkeit sind in dieser Darstellung die Bezugszeichen 11, 14 und 15 jeweils nur einmal angegeben, kennzeichnen aber jeweils eine ganze Gruppe der jeweils parallel verlaufenden Leitungen. Die entlang der Längsspanten 10, der Querspanten 12 und der Querstreben 13 verlaufenden Leitungen 11, 14 und 15 bilden im eingebauten Zustand der Strukturelemente ein Netz mit Kreuzungspunkten aus, wie aus Figur 3 ersichtlich. Die Kreuzungspunkte sind dabei nicht so zu verstehen, dass sich an diesen Stellen die Leitungen tatsächlich berühren, sondern vielmehr ergeben gedachte Linien entlang der Längsrichtung der Leitungen 11, 14, 15 in der zu Figur 2 entsprechenden Draufsicht Kreuzungspunkte. An den Kreuzungspunkten des so gebildeten Netzes besteht zunächst keine optische/elektrische Verbindung. Für die Herstellung einer solchen Verbindung werden die Leitungen 11, 14 und 15 mit später näher erläuterten Verbindungselementen verbunden. Soll beispielsweise eine Systemkomponente 16, die mit der linken (bezogen auf die Darstellung in der Figur) der Vielzahl an Leitungen 14 verbunden ist, mit einer Systemkomponente (z.B. einer Steuereinheit) 17 verbunden werden, die mit der obersten der Vielzahl an Leitungen 11 verbunden ist, dann ist am Kreuzungspunkt 27 eine Verbindung herzustellen. Der Leitungsabschnitt dieser obersten Leitung aus der Vielzahl an Leitungen 11, welcher rechts vom Kreuzungspunkt 27 liegt, kann rechts vom Kreuzungspunkt 27 abgetrennt werden und dieser abgetrennte Leitungsabschnitt kann wieder für andere Systemkomponentenverbindungen verwendet werden. Ebenso kann eine Systemkomponente 18, die mit der zweiten Leitung von links aus der Vielzahl von Leitungen 15 verbunden ist, mit einer Systemkomponente 19 verbunden werden, die mit der zweiten von oben aus der Vielzahl an Leitungen 11 verbunden ist, indem an einem Kreuzungspunkt 20 diese Leitung 11 mit einer Leitung 14 verbunden wird und letztere an einem weiteren Kreuzungspunkt 28 mit der der Systemkomponente 18 zugeordneten Leitung 15 verbunden wird. Obwohl bereits erwähnt sei nochmal darauf hingewiesen, dass obwohl hier die Leitungen zur Vereinfachung in der Einzahl bezeichnet werden, es sich in der Praxis bei einer "Leitung" um eine oder mehrere Einzelleitungen und/oder einem oder mehreren zusammengehörigen Leitungsbündeln handeln kann. Auf diese Art und Weise ist nach Zusammenbau der Strukturelemente zu einer Flugzeugstruktur, wie beispielsweise einem Flugzeugrumpf, jede Stelle dieser Flugzeugstruktur mit einer Leitung erreichbar, indem an einem geeigneten Kreuzungspunkt eine Verbindung hergestellt wird. In flexibler Weise kann somit auch jede erdenkliche Zig-Zag Route zur Umgehung von Bereichen oder aus Redundanzgründen durch die Flugzeugstruktur verwirklicht werden. So kann, wie in Figur 3 veranschaulicht, eine Systemkomponente 29 mit einer Systemkomponente 31 über die Herstellung von Verbindungen an mehreren Kreuzungspunkten 30 entlang einer gestrichelt eingezeichneten Route verbunden werden. Pro Längsspant, Querspant oder Querträger sind vorzugsweise 12 oder mehr Leitungen vorgesehen, was über mehrere Millionen möglicher Routen zur Verbindung von Systemkomponenten ergibt. Allgemein ausgedrückt wird somit ein vorinstalliertes, anpassbares Netz an vorinstallierten Leitungen in einer Flugzeugstruktur verwirklicht.

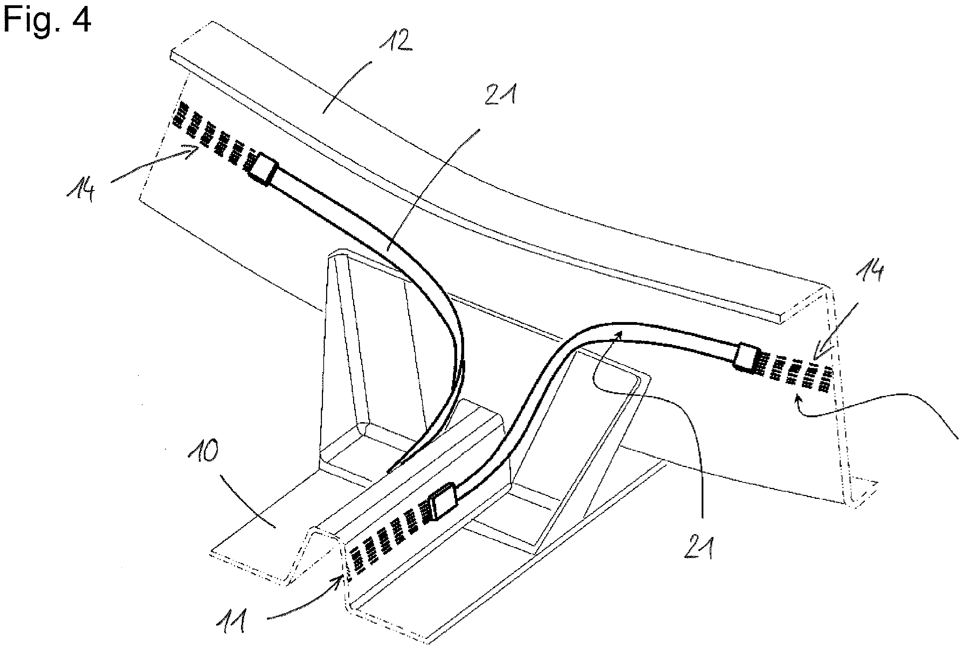

Figur 4 zeigt eine spezifische Ausgestaltung der Verbindung von Leitungen. Wie in der Figur ersichtlich, weist der Längsspant 10 einen in Längsrichtung des Längsspants 10 verlaufenden Steg auf, an dessen Flanken jeweils ein Bündel an Glasfaserleitungen 11 eingebettet ist. Der Längsspant 10 ist mit einem Querspant 12 gekreuzt, in dem vom Kreuzungspunkt in entgegengesetzte Richtungen abgehend jeweils ein Bündel an Glasfaserleitungen 14 eingebettet ist. Zum Verbinden der Glasfaserleitungen 11 und 14 sind zwei Verbindungselemente 21 vorgesehen, die vorzugsweise biegsame, optische Folien mit 12 bis 96 parallel zueinander verlaufenden Glasfasern sind. In dem in Figur 4 dargestellten Ausführungsbeispiel ist jeweils eines der zwei am/im Längsspant 10 vorgesehenen Bündel an Glasfasern 11 mit einem der zwei im Querspant 12 vorgesehenen Bündel an Glasfasern 14 verbunden. Gemäß der Darstellung wird dabei mittels des Verbindungselements 21 die Verbindung zwischen mehreren parallel zueinander verlaufenden Glasfaserleitungen hergestellt. Alternativ ist auch möglich, dass das Verbindungselement 21 derart aufgebaut ist, dass nur jeweils eine einzige oder wenige Glasfasern des Bündels an Glasfasern 11 mit einer dazu entsprechenden Anzahl an Glasfasern aus dem Bündel an Glasfasern 14 verbunden wird. Der Anschluss der Enden des Verbindungselements 21 an die eingebetteten Glasfasern erfolgt derart, dass die eingebettete Glasfaser mittels Zugangsbohrung angezapft und das von dieser geleitete Licht in die Enden umgelenkt und von diesen weitergeleitet wird. Eine bestimmte Form solcher Anschlüsse sind aus dem Stand der Technik, wie beispielsweise der US 7 039 276 B2 bekannt. Durch die Anbringung/Einbettung der Glasfasern an/in die Flanken des Stegs des Längsspants 10 kann eine Trennung der Leitungsführung für kritische Systeme in Flugzeuglängsrichtung realisiert werden. Durch die entgegengesetzte Weiterführung der Leitungen 14 am Querspant 12 wird diese sichere Trennung auch am Querspant 12 umgesetzt. Diese Trennung kann bei allen Strukturelementen 10, 12, 13 durch Anbringung der Leitungen 11, 14, 15 auf in entgegengesetzte Richtungen gewandte Seiten realisiert werden.

Um Wiederholungen zu vermeiden werden in der Beschreibung der folgenden Figuren nur jene Aspekte erläutert, die sich von der bisherigen Beschreibung unterscheiden.

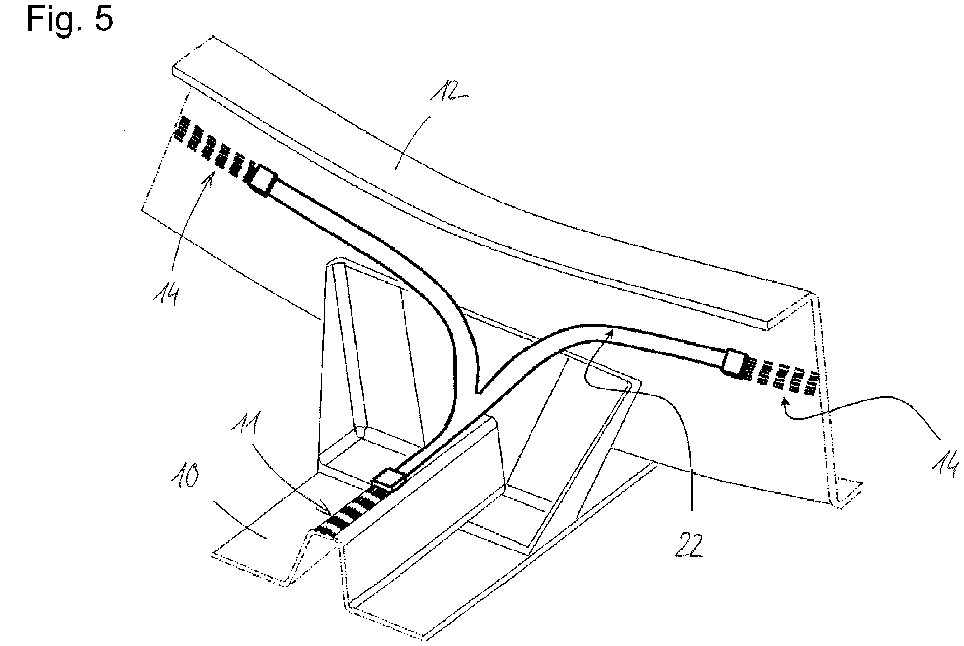

Figur 5 zeigt eine weitere spezifische Ausgestaltung der Verbindung von Leitungen. In dieser Ausgestaltung ist der Längsspant 10 mit einem Bündel an Glasfaserleitungen 11 versehen, die im Bereich der Spitze des Stegs eingebettet sind. Ein Verbindungselement 22 ist Y-förmig und verbindet einen Teil der Glasfasern aus dem Bündel an Glasfasern 11 mit dem Bündel an Glasfasern 14 die am Querspant 12 in eine Richtung verlaufen und den anderen Teil mit dem Bündel an Glasfasern 14 die in die dazu entgegengesetzte Richtung verlaufen.

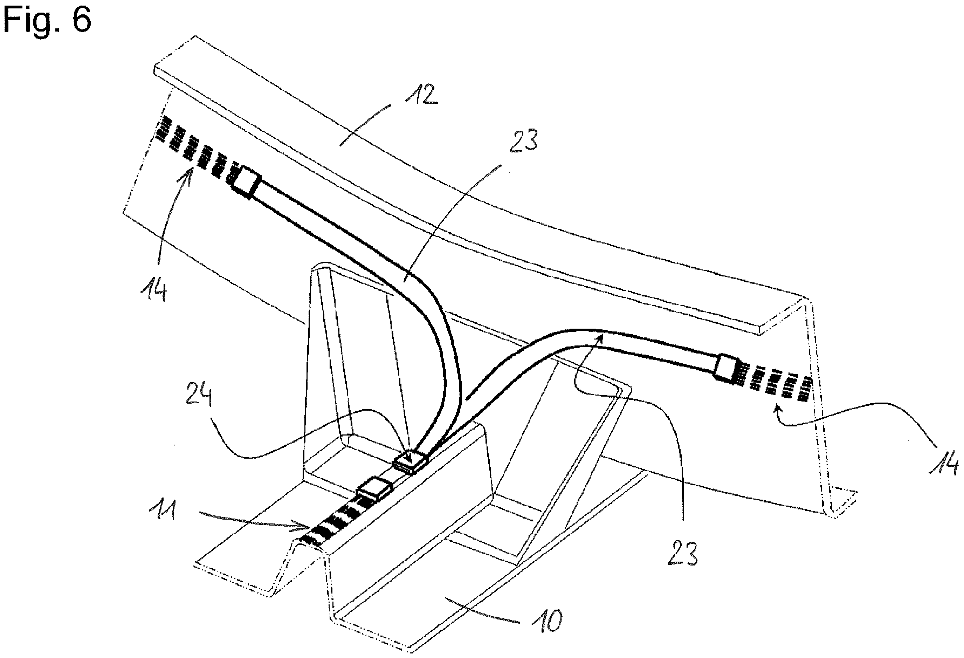

Figur 6 zeigt eine weitere spezifische Ausgestaltung der Verbindung von Leitungen. In dieser Ausgestaltung ist der Längsspant 10 mit einem Bündel an Glasfaserleitungen 11 versehen, die im Bereich der Spitze des Stegs eingebettet sind. Ein Verbindungselement 23 ist ebenfalls Y-förmig und verbindet eine einzelne Glasfaser aus dem Bündel an Glasfasern 11 jeweils mit einer Glasfaser aus den zwei Bündeln an Glasfasern 14 des Querspants 21. Die Aufteilung einer Glasfaserverbindung in zwei Glasfaserverbindungen erfolgt dabei mittels eines Leistungsteilers 24 ("powersplitter"), der aus dem Stand der Technik bekannt ist. Dies hat den Vorteil, dass die Aufteilung der als Zuleitungen fungierenden Glasfaserleitungen 11 auf jeweils zwei weiterführende Glasfaserleitungen 14 zu einer Redundanzerhöhung im Falle einer Beschädigung führt. Beispielsweise könnte eine Reifen- oder Propellerbeschädigung dazu führen, dass abgetrennte und geschleuderte Teile eine der Glasfaserleitungen 14 durchtrennt. Die davon getrennt und in die entgegengesetzte Richtung zur Systemkomponente geführte Glasfaserleitung 14 wäre dann immer noch intakt. Somit kann durch bewusste Auswahl an Routen sichergestellt werden, dass auch bei Unterbrechung einer Leitung für eine Redundanz gesorgt ist.

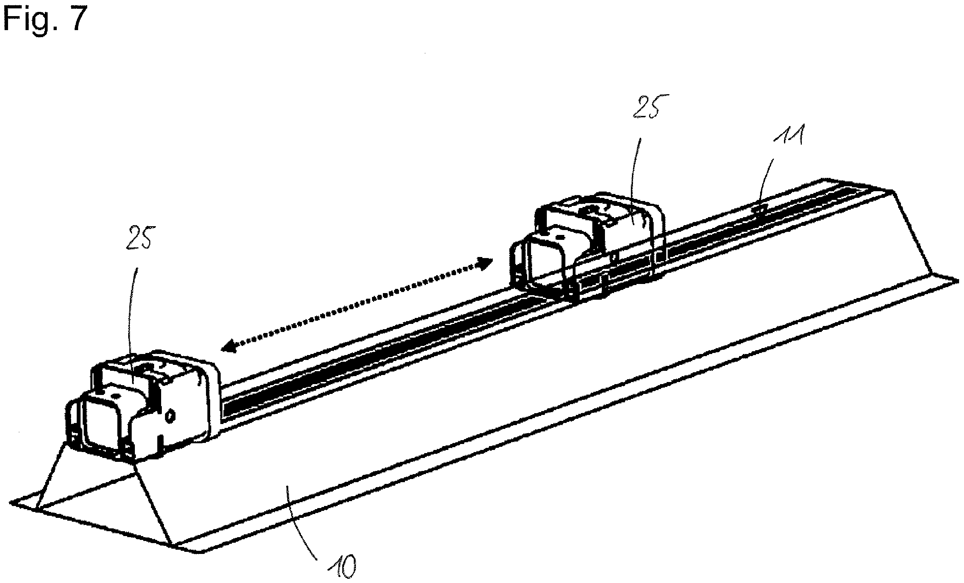

Figur 7 zeigt Zugangskupplungen zum Anschluss an die eingebetteten Leitungen. Der Anschluss von Systemkomponenten, wie beispielsweise Sensoren, Stellglieder, Klimatisierungseinrichtungen, Unterhaltungseinrichtungen, Mikroprozessoren, Flugkontrollsysteme, Flugsteuerungssysteme usw., an die eingebetteten Leitungen erfolgt vorzugsweise über Zugangskupplungen 25, bei denen die eingebettete Glasfaser mittels Zugangsbohrung angezapft und das von dieser geleitete Licht mittels einer Mikrolinsenanordnung in die Zugangskupplung 25 umgelenkt und von dieser weitergeleitet wird. Die Zugangskupplung 25 kann dann über ein in verschiedenen Längen verfügbares flexibles Verbindungselement mit der Systemkomponente verbunden werden. Die Positionierung dieser Zugangskupplung 25 wird definiert, wenn die Definition der Flugzeugkonfiguration feststeht und definiert ist, an welcher Stelle welche Systemkomponente installiert wird. Dies hat den Vorteil, dass die Anbindungsposition bis zu diesem Zeitpunkt flexibel ist. Da die Glasfasern vorzugsweise entlang der gesamten Länge des Strukturelements verlaufen, kann die Zugangskupplung 25 entlang der gesamten Länge des Strukturelements vorgesehen werden, obwohl die Anbindung im Bereich der Kreuzungspunkte, an denen sich Strukturelemente 10, 12, 13 verschiedener Typen kreuzen, am wahrscheinlichsten ist. Zu beachten ist jedoch, dass bei eingebetteten Leitungen Positionen zur Anbringung der Zugangskupplung 25 bevorzugt werden, welche die Strukturstabilität des Strukturelements 10, 12, 13 durch Einbringen der Bohrungen am wenigsten beeinflussen. Alternativ zum Einbringen von Bohrungen kann die Zugangskupplung auch durch Evaneszenz-Ankopplung realisiert werden.

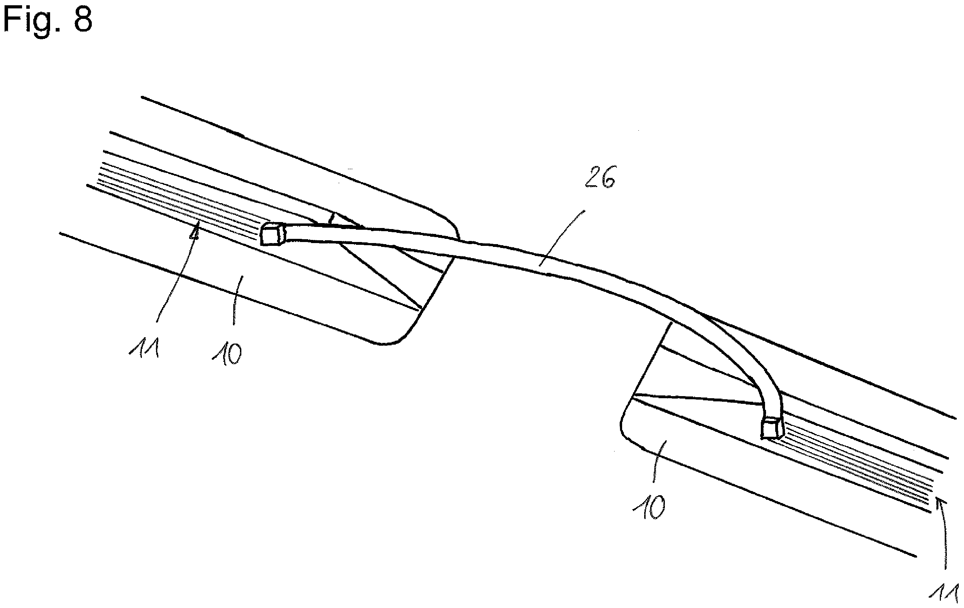

Figur 8 zeigt die Verbindung von fluchtenden Leitungen. Da sich die Strukturelemente, wie Längsspanten 10, Querspanten 12 und Querstreben 13, in der Regel nicht über die gesamte Länge bzw. Breite oder den Umfang des Flugzeugrumpfs erstrecken, sondern mehrere Strukturelemente des gleichen Typs stirnseitig miteinander verbunden sind, ist auch eine Überbrückung der Vielzahl an Leitungen 11, 14, 15 an diesen Verbindungsstellen erforderlich. Die Leitungen 11, 14, 15 erstrecken sich dabei vorzugsweise über 80 Prozent der Gesamtlänge eines Strukturelements. Noch bevorzugter erstrecken sie sich über 90 Prozent und noch bevorzugter über die Gesamtlänge des Strukturelements 10, 12, 13. Die Leitungen 11, 14, 15 auf einem Strukturelement sind an ihren jeweiligen Enden mit den dazu fluchtenden Enden der Leitungen des benachbarten Strukturelements vom gleichen Typ (Längsspant, Querspant, Querstrebe) mittels Verbindungselementen 26 verbunden, so dass beispielsweise im Falle der Längsspanten 10 eine sich über die gesamte Flugzeugrumpflänge erstreckende Leitung entlang der fluchtend angeordneten Längsspanten 10 ausgebildet wird. Um möglichen Übertragungsverlusten durch eine Vielzahl von Verbindungen in einer bestimmten Route vorzubeugen, ist es möglich, optische Verstärkungskomponenten entlang der Leitungen vorzusehen, wie beispielsweise Erbium-dotierte Faserverstärker. Außerdem ist es möglich Aktivverstärker an den oben beschriebenen Verbindungsstellen vorzusehen.

Ebenfalls ist möglich, dass sich die Leitungen 11, 14, 15 nicht über die gesamte Länge des Strukturelements erstrecken, sondern die Länge nach dem Abstand zwischen Kreuzungspunkten, an denen sich die Strukturelemente unterschiedlicher Typen kreuzen, bemessen ist. Vorzugsweise entspricht dann die Länge einer Leitung 80 Prozent dieses Abstands, noch mehr bevorzugt 90 Prozent des Abstands und noch mehr bevorzugt dem gesamten Abstand. Eine Bestimmung der Länge nach diesem Abstand ist jedoch nur sinnvoll, wenn dieser Abstand als endgültig für den Rest des Flugzeugprogramms erachtet wird.

Es wird ausdrücklich betont, dass obwohl in den vorhergehend beschriebenen Ausführungsbeispielen Längsspanten, Querspanten und Querstreben als Primärstrukturelemente genannt wurden, die mit dem erfindungsgemäßen Leitungsnetz versehbaren Primärstrukturelemente nicht darauf beschränkt sind. Auch andere Primärstrukturelemente wie Außenhautteile können zum Tragen der Leitungen verwendet werden. Außerdem könnten bei einem Flugzeugrumpf in Schalenbauweise, bei dem die Außenhaut das primär tragende Element ist, die Leitungen ebenso mit dieser Außenhaut verbunden werden.

Ferner sei betont, dass obwohl in einigen Ausführungsbeispielen nur Glasfasern genannt wurden, dieses Ausführungsbeispiel in übertragener Weise zusätzlich oder alternativ mit elektrischen Leitungen realisiert werden kann.

Alternativ oder zusätzlich zur vorhergehend beschriebenen Anbringung bzw. Einbettung der Leitungen 11, 14, 15 in Primärstrukturelemente wie Längsspanten, Querspanten und Querstreben können die Leitungen 11, 14, 15 auch an/in Sekundärstrukturelemente angebracht bzw. eingebettet werden, wie beispielsweise Verkleidungspaneele, Bodenpaneele, Überkopfgepäckfächer, usw. Allgemein sind Sekundärstrukturelement jene Strukturelemente, welche nicht die Primärlast des Flugzeugs tragen und deren Versagen somit nicht die strukturelle Integrität einer Flugzeugzelle beeinträchtigen würde.

In einer weiteren Anwendung fungieren die die Flugzeugstruktur überspannenden Leitungen als Sensoren, wie beispielsweise als Temperatursensor oder als Materialbelastungssensor. Da die Leitungen entsprechend äußerer Einflüsse ihre Leitungseigenschaften ändern, kann dieser Effekt durch gezielte Auswertung entsprechend genutzt werden.

Es sei darauf hingewiesen, dass Merkmale, die mit Verweis auf eines der obigen Ausführungsbeispiele bzw. einer Ausführung beschrieben worden sind, auch in Kombination mit anderen Merkmalen anderer oben beschriebener Ausführungsbeispiele verwendet werden können.

## Patentansprüche

1. Flugzeugstruktur mit:
Strukturelementen (10, 12, 13);
einer ersten Vielzahl von Leitungen (11), die fest mit Strukturelementen (10) verbunden sind;
einer zweiten Vielzahl von Leitungen (14, 15), die fest mit Strukturelementen (12, 13) verbunden sind und deren Längsrichtung sich mit der Längsrichtung der ersten Vielzahl von Leitungen (11) kreuzt, so dass die Längsrichtungen der Leitungen ein die Flugzeugstruktur zumindest abschnittsweise überspannendes Netz bilden;
Verbindungselementen (21, 22, 23), um, im in die Flugzeugstruktur eingebauten Zustand der Strukturelemente (10, 12, 13), ausgewählte Leitungen (11) der ersten Vielzahl mit ausgewählten Leitungen (14, 15) der zweiten Vielzahl an ausgewählten Kreuzungspunkten des Netzes zu verbinden, um somit Leitungen zur Strom- und/oder Datenübertragung auszubilden; und
einer Zugangskupplung (25) zum Verbinden einer Flugzeugsystemkomponente (16, 17, 18, 19) mit einer oder mehreren Leitungen aus der ersten oder zweiten Vielzahl an Leitungen, wobei die Zugangskupplung entlang der Leitungen eines Strukturelements positionierbar ist, indem durch Materialabtragung ein Zugang zur entsprechenden Leitung geschaffen wird.

2. Flugzeugstruktur gemäß Anspruch 1, wobei es sich bei den Strukturelementen (10, 12, 13) um Längsspanten, Querspanten und/oder Querstreben handelt, wobei die erste Vielzahl von Leitungen (11) mit den Längsspanten und die zweite Vielzahl von Leitungen (14, 15) mit den Querspanten und/oder Querstreben verbunden ist.

3. Flugzeugstruktur gemäß Anspruch 2, wobei jeweils ein Längsspant, ein Querspant und/oder eine Querstrebe zumindest mit einem Bündel aus mindestens 12 Leitungen versehen ist.

4. Flugzeugstruktur gemäß Anspruch 1, wobei es sich bei den Strukturelementen (10, 12, 13) um Sekundärstrukturelemente handelt.

5. Flugzeugstruktur gemäß einem der vorhergehenden Ansprüche, wobei die Leitungen Glasfaserleitungen sind.

6. Flugzeugstruktur gemäß Anspruch 5, wobei das Verbindungselement (21, 22, 23) flexibel ist und eine Glasfaserleitung aufweist.

7. Flugzeugstruktur gemäß einem der vorhergehenden Ansprüche, wobei die Leitungen (10, 12, 13) zumindest abschnittsweise auf den Strukturelementen (21, 22, 23) angebracht sind.

8. Flugzeugstruktur gemäß einem der vorhergehenden Ansprüche, wobei die Leitungen (10, 12, 13) zumindest abschnittsweise in die Strukturelemente (21, 22, 23) eingebettet sind.

9. Verfahren zur Herstellung einer Flugzeugstruktur, mit den Schritten:
Bereitstellen von Strukturelementen (10, 12, 13);
Festes Verbinden einer ersten Vielzahl von Leitungen (11) mit Strukturelementen (10);
Festes Verbinden einer zweiten Vielzahl von Leitungen (14, 15) mit Strukturelementen (12, 13), so dass die Längsrichtung der zweiten Vielzahl von Leitungen (14, 15) sich mit der Längsrichtung der ersten Vielzahl von Leitungen (11) kreuzt und die Längsrichtungen der Leitungen ein die Flugzeugstruktur zumindest abschnittsweise überspannendes Netz bilden;
Verbauen der Strukturelemente (10, 12, 13) in ein Flugzeug;
Verbinden ausgewählter Leitungen (11) der ersten Vielzahl mit ausgewählten Leitungen (14, 15) der zweiten Vielzahl an ausgewählten Kreuzungspunkten des Netzes mittels Verbindungselementen (21, 22, 23), um somit Leitungen zur Strom- und/oder Datenübertragung auszubilden;
wobei eine Zugangskupplung (25) zum Verbinden einer Flugzeugsystemkomponente (16, 17, 18, 19) mit einer oder mehreren Leitungen (11, 14, 15) aus der ersten oder zweiten Vielzahl an Leitungen vorgesehen wird, wobei die Zugangskupplung entlang der Leitungen eines Strukturelements positionierbar ist, indem durch Materialabtragung ein Zugang zur entsprechenden Leitung geschaffen wird.

10. Verfahren zur Herstellung einer Flugzeugstruktur gemäß Anspruch 9, wobei die Leitungen (11, 14, 15) mit den Strukturelementen (10, 12, 13) verbunden werden, indem sie zumindest abschnittsweise auf den Strukturelementen angebracht werden.

11. Verfahren zur Herstellung einer Flugzeugstruktur gemäß Anspruch 9 oder 10, wobei die Leitungen (11, 14, 15) mit den Strukturelementen (10, 12, 13) verbunden werden, indem sie zumindest abschnittsweise in die Strukturelemente eingebettet werden.

12. Verfahren zur Herstellung einer Flugzeugstruktur gemäß einem der Ansprüche 9 bis 11, wobei die Verbindungselemente (21, 22, 23) an einer Vielzahl von Positionen entlang der Längsrichtung der Leitungen (11, 14, 15) mit den Leitungen verbunden werden können, indem durch Materialabtragung ein Zugang zur entsprechenden Leitung geschaffen wird.

13. Verfahren zur Herstellung einer Flugzeugstruktur gemäß einem der Ansprüche 9 bis 12, wobei die Zugangskupplung (25) an einer Vielzahl von Positionen entlang der Längsrichtung der Leitungen mit den Leitungen verbunden werden kann, indem durch Materialabtragung ein Zugang zur entsprechenden Leitung geschaffen wird.

## Claims

1. An aircraft structure comprising:
structural elements (10, 12, 13);
a first multitude of lines (11) that are connected to structural elements (10) in a fixed manner;
a second multitude of lines (14, 15) that are connected to structural elements (12, 13) in a fixed manner and whose longitudinal direction intersects the longitudinal direction of the first multitude of lines (11) so that the longitudinal directions of the lines form a network that spans the aircraft structure at least in some sections; and
connecting elements (21, 22, 23) in order to, in the state of the structural elements (10, 12, 13) installed in the aircraft structure, connect selected lines (11) of the first multitude to selected lines (14, 15) of the second multitude at selected points of intersection of the network, and in this way form lines for electricity transmission and/or data transmission; and
an access coupling (25) for connecting an aircraft system component (16, 17, 18, 19) to one or several lines from the first or second multitude of lines, wherein the access coupling is positionable along the lines of a structural element as by means of material removal, access to the corresponding line is created.

2. The aircraft structure of claim 1, wherein the structural elements (10, 12, 13) are longitudinal frame elements, transverse frame elements and/or transverse braces, wherein the first multitude of lines (11) is connected to the longitudinal frame elements and the second multitude of lines (14, 15) is connected to the transverse frame elements and/or transverse braces.

3. The aircraft structure of claim 2, wherein in each case a longitudinal frame element, a transverse frame element and/or a transverse brace comprise at least one bundle of at least twelve lines.

4. The aircraft structure of claim 1, wherein the structural elements (10, 12, 13) are secondary structural elements.

5. The aircraft structure of any one of the preceding claims, wherein the lines are optical fibre lines.

6. The aircraft structure of claim 5, wherein the connecting element (21, 22, 23) is flexible and comprises an optical fibre line.

7. The aircraft structure of any one of the preceding claims, wherein the lines (10, 12, 13) at least in some sections are attached to the structural elements (21, 22, 23).

8. The aircraft structure of any one of the preceding claims, wherein the lines (10, 12, 13) at least in some sections are embedded in the structural elements (21, 22, 23).

9. A method for manufacturing an aircraft structure, comprising the steps of:
providing structural elements (10, 12, 13);
connecting a first multitude of lines (11) to structural elements (10) in a fixed manner;
connecting a second multitude of lines (14, 15) to structural elements (12, 13) in a fixed manner so that the longitudinal direction of the second multitude of lines (14, 15) intersects with the longitudinal direction of the first multitude of lines (11), and the longitudinal directions of the lines form a network that spans the aircraft structure at least in some sections;
installing the structural elements (10, 12, 13) in an aircraft;
connecting selected lines (11) of the first multitude to selected lines (14, 15) of the second multitude at selected points of intersection of the network by means of connecting elements (21, 22, 23) in order to form lines for electricity transmission and/or data transmission in this way;
wherein an access coupling (25) for connecting an aircraft system component (16, 17, 18, 19) to one or several lines from the first or second multitude of lines is provided, wherein the access coupling is positionable along the lines of a structural element as by means of material removal, access to the corresponding line is created.

10. The method for manufacturing an aircraft structure of claim 9, wherein the lines (11, 14, 15) are connected to the structural elements (10, 12, 13) in that at least in some sections they are attached to the structural elements.

11. The method for manufacturing an aircraft structure of claim 9 or 10, wherein the lines (11, 14, 15) are connected to the structural elements (10, 12, 13) in that at least in some sections they are embedded in the structural elements.

12. The method for manufacturing an aircraft structure of one of claims 9 to 11, wherein at a multitude of positions along the longitudinal direction of the lines (11, 14, 15) the connecting elements (21, 22, 23) are connectable to the lines in that, by means of material removal, access to the corresponding line is created.

13. The method for manufacturing an aircraft structure of any one of claims 9 to 12, wherein the access coupling (25) at a multitude of positions along the longitudinal direction of the lines is connectable to the lines in that, by means of material removal, access to the corresponding line is created.

## Revendications

1. Structure d'avion comportant :
des éléments de structure (10, 12, 13) ;
une première pluralité de lignes (11), qui sont reliées de manière solidaire à des éléments de structure (10) ;
une seconde pluralité de lignes (14, 15), qui sont reliées de manière solidaire à des éléments de structure (12, 13) et dont la direction longitudinale se croise avec la direction longitudinale de la première pluralité de lignes (11), de telle sorte que les directions longitudinales des lignes forment un réseau recouvrant au moins en partie la structure d'avion ;
des éléments de liaison (21, 22, 23) pour, lorsque les éléments de structure (10, 12, 13) sont montés dans la structure d'avion, relier des lignes (11) choisies de la première pluralité à des lignes (14, 15) choisies de la second pluralité sur des points de croisement choisis du réseau, afin de former ainsi des lignes de transmission de courant et/ou de données ; et
un dispositif d'accouplement d'accès (25) destiné à relier un composant système d'avion (16, 17, 18, 19) à une ou plusieurs lignes de la première ou la seconde pluralité de lignes, le dispositif d'accouplement d'accès pouvant être positionné le long des lignes d'un élément de structure tout en créant un accès à la ligne correspondante par enlèvement de matière.

2. Structure d'avion selon la revendication 1, dans laquelle les éléments de structure (10, 12, 13) sont des couples longitudinaux, des couples transversaux et/ou des entretoises, la première pluralité de lignes (11) étant reliée aux couples longitudinaux et la seconde pluralité de lignes (14, 15) étant reliée aux couples transversaux et/ou aux entretoises.

3. Structure d'avion selon la revendication 2, dans laquelle un couple longitudinal, un couple transversal et/ou une entretoise sont respectivement pourvus d'au moins un faisceau d'au moins 12 lignes.

4. Structure d'avion selon la revendication 1, dans laquelle les éléments de structure (10, 12, 13) sont des éléments de structure secondaires.

5. Structure d'avion selon l'une des revendications précédentes, dans laquelle les lignes sont des lignes à fibres optiques.

6. Structure d'avion selon la revendication 5, dans laquelle l'élément de liaison (21, 22, 23) est flexible et comporte une ligne à fibres optiques.

7. Structure d'avion selon l'une des revendications précédentes, dans laquelle les lignes (10, 12, 13) sont montées au moins en partie sur les éléments de structure (21, 22, 23).

8. Structure d'avion selon l'une des revendications précédentes, dans laquelle les lignes (10, 12, 13) sont incorporées au moins en partie dans les éléments de structure (21, 22, 23).

9. Procédé de fabrication d'une structure d'avion, comprenant les étapes consistant à :
fournir des éléments de structure (10, 12, 13) ;
relier de manière solidaire une première pluralité de lignes (11) à des éléments de structure (10) ;
relier de manière solidaire une seconde pluralité de lignes (14, 15) à des éléments de structure (12, 13), de telle sorte que la direction longitudinale de la seconde pluralité de lignes (14, 15) se croise avec la direction longitudinale de la première pluralité de lignes (11) et
les directions longitudinales des lignes forment un réseau recouvrant au moins en partie la structure d'avion ;
monter les éléments de structure (10, 12, 13) dans un avion ;
relier des lignes (11) choisies de la première pluralité à des lignes (14, 15) choisies de la seconde pluralité sur des points de croisement choisis du réseau au moyen d'éléments de liaison (21, 22, 23) afin de former ainsi des lignes de transmission de courant et/ou de données ;
dans lequel un dispositif d'accouplement d'accès (25) destiné à relier un composant système d'avion (16, 17, 18, 19) à une ou plusieurs lignes (11, 14, 15) de la première ou la seconde pluralité de lignes est prévu, le dispositif d'accouplement d'accès pouvant être positionné le long des lignes d'un élément de structure, tout en créant un accès à la ligne correspondante par enlèvement de matière.

10. Procédé de fabrication d'une structure d'avion selon la revendication 9, dans lequel les lignes (11, 14, 15) sont reliées aux éléments de structure (10, 12, 13), en les montant au moins par section sur les éléments de structure.

11. Procédé de fabrication d'une structure d'avion selon la revendication 9 ou 10, dans lequel les lignes (11, 14, 15) sont reliées aux éléments de structure (10, 12, 13), en les incorporant au moins par section dans les éléments de structure.

12. Procédé de fabrication d'une structure d'avion selon l'une des revendications 9 à 11, dans lequel les éléments de liaison (21, 22, 23) peuvent être reliés aux lignes dans une pluralité de positions le long de la direction longitudinale des lignes (11, 14, 15), en créant un accès à la ligne correspondante par enlèvement de matière.

13. Procédé de fabrication d'une structure d'avion selon l'une des revendications 9 à 12, dans lequel le dispositif d'accouplement d'accès (25) peut être relié aux lignes dans une pluralité de positions le long de la direction longitudinale des lignes, en créant un accès à la ligne correspondante par enlèvement de matière.
